# EUROPÄISCHE PATENTANMELDUNG

(11) **EP 0 654 299 A1**
(43) Veröffentlichungstag der Anmeldung: **24.05.1995**
(21) Anmeldenummer: 94117606.7
(22) Anmeldetag: 08.11.1994
(51) Int. Cl.: B01F 15/00, B28C 5/42

(54) **Misch- und Verteilvorrichtung für Viehfutter**

(30) Priorität: 11.11.1993 DE 4338514
(71) Anmelder: von der Heide, Hans, D-49479 Ibbenbüren (DE)
(72) Erfinder: von der Heide, Hans, D-49479 Ibbenbüren (DE)
(74) Vertreter: Schulze Horn, Stefan, Dipl.-Ing.

(57) **Zusammenfassung**

Die Misch- und Verteilvorrichtung für Viehfutter ist dadurch gekennzeichnet, daß der Behälter eine geschlossene Trommel (2) ist mit einem Trommelmantel (21) und zwei Trommelstirnwänden (22,22'), wobei die Trommel (2) um eine horizontale oder geneigte, durch die Trommelstirnwände (22,22') verlaufende Drehachse (20) drehbar ist und wobei die Trommel (2) wenigstens eine verschließbare Öffnung für das Beschicken und Entleeren der Trommel (2) aufweist.

## Beschreibung

Die Erfindung betrifft eine Misch- und Verteilvorrichtung für Viehfutter, nach dem Oberbegriff des Anspruches 1.

Aus DE 28 51 304 A1 ist ein Gerät zum Aufnehmen, Vermischen, Transportieren und Verteilen von Silagefutter bekannt, welches einen Aufnahmeraum mit einer Misch- und Verteilvorrichtung aufweist. Der Aufnahmeraum ist dabei bevorzugt eine nach oben offene Mulde, in welcher mehrere schneckenförmige Rotoren als Mischorgane angeordnet sind. Nach erfolgter Mischung des Futters erfolgt dessen Austrag durch eine verschwenkbare Klappe, die an der einen Stirnseite der Mulde in deren tiefstem Teil gegenüber dem Ende eines der Rotoren angeordnet ist.

Als nachteilig wird bei diesem Stand der Technik angesehen, daß das Mischen von verschiedenen Futterkomponenten eine erhebliche Zeit erfordert und daß außerdem eine vollständige Durchmischung nicht immer sichergestellt werden kann, da der Bereich, der von den Rotoren erreicht wird, nur einen vergleichsweise kleinen Anteil des Innenraumes der Mulde darstellt. Hierdurch kann es vorkommen, daß Teilbereiche des Muldeninneren nicht in den Mischvorgang einbezogen werden, so daß eine ungleichmäßige oder unvollständige Futtermischung auftritt.

Aus GB 15 12 206 ist eine Transport- und Reinigungsvorrichtung für Futterfrüchte bekannt, wobei die Vorrichtung eine Trommel mit zwei Stirnwänden und mit einem gitterförmigen Trommelmantel umfaßt, wobei diese Trommel geöffnet und geschlossen werden kann und wobei die Trommel im geschlossenen Zustand um ihre Längsmittelachse in Drehung versetzbar ist.

Mit dieser bekannten Vorrichtung können zwar großstückige Futterfrüchte, wie Rüben, aufgenommen und transportiert sowie mechanisch gereinigt werden, jedoch ist die Vorrichtung nicht für ein Mischen und Verteilen von kleinteiligem Futter, wie Silage, Biertreber, Kraftfutter oder Mineralfutter, geeignet, da dieses Futter während eines Mischvorganges vollständig durch den gitterförmigen Trommelmantel aus der Trommel herausrieseln würde.

Es stellt sich daher die Aufgabe, eine Misch- und Verteilvorrichtung der eingangs genannten Art zu schaffen, bei der die aufgeführten Nachteile vermieden werden und die insbesondere für unterschiedliche Futterarten geeignet ist und die bei einer kurzen Mischzeit eine gleichmäßige und gründliche Vermischung verschiedener Futterkomponenten gewährleistet.

Die Lösung dieser Aufgabe gelingt erfindungsgemäß durch eine Misch- und Verteilvorrichtung der eingangs genannten Art mit den kennzeichnenden Merkmalen des Anspruches 1.

Dadurch, daß der Behälter insgesamt drehbar ist, wird eine äußerst gründliche Mischung verschiedener im Behälter befindlicher Futterkomponenten in kurzer Zeit erreicht. Durch die Verwendung einer geschlossenen Trommel wird zudem sichergestellt, daß selbst feinstes, mehlförmiges Futter während des Mischvorganges durch Drehen des Behälters nicht aus diesem verloren gehen kann. Für das Beschicken und Entleeren der Trommel ist wenigstens eine verschließbare Öffnung vorgesehen, wobei je nach Ausführung der Vorrichtung eine einzige Öffnung sowohl für das Beschicken als auch Entleeren vorgesehen werden kann oder die Trommel mit getrennten Öffnungen ausgestattet sein kann, von denen die eine nur für das Beschicken und die andere nur für das Entleeren genutzt wird.

Bevorzugt ist vorgesehen, daß zur Bildung der verschließbaren Öffnung der Trommelmantel über einen Teil seines Umfanges ausklappbar ist. Dabei ist vorteilhaft der ausklappbare Trommelmantelteil um eine entlang der Trommelmantelfläche parallel zur Drehachse verlaufende Schwenkachse verschwenkbar. Vorzugsweise umfaßt der ausklappbare Trommelmantelteil 1/8 bis 1/3 des Trommelmantelumfanges. Schließlich wird bezüglich des ausklappbaren Trommelmantelteils noch vorgeschlagen, daß dieser mit zu den Trommelstirnwänden parallelen Seitenwänden zur Bildung einer Ladeschaufel ausgeführt ist.

Diese Ausgestaltungen der Trommel mit einem ausklappbaren Trommelmantelteil erlauben ein einfaches Beschicken der Trommel mit den miteinander zu vermischenden Futterchargen. In einer einfachen Ausführung der Misch- und Verteilvorrichtung kann dieser ausklappbare Trommelmantelteil auch zum Entleeren der Trommel benutzt werden, wobei dann der ausklappbare Trommelmantelteil nach Art einer Ladeschaufel betätigt wird. Zur Bewegung des ausklappbaren Trommelmantelteils relativ zur Trommel sind zweckmäßig an sich bekannte, dem Fachmann geläufige Betätigungsmittel vorgesehen, vorzugsweise mindestens eine hydraulisch betätigbare Kolben-Zylinder-Einheit, die mit der Trommel mitdrehbar ist.

Weiter schlägt die Erfindung vor, daß an mindestens einer der Trommelstirnwände ein Drehlager und an mindestens einer der Trommelstirnwände ein Drehantrieb zur Drehung der Trommel angeordnet ist, wobei der Drehantrieb entweder für nur eine Drehrichtung oder umschaltbar für wahlweise die eine oder die andere Drehrichtung ausgelegt ist. Wird nur ein Drehlager vorgesehen, ist zweckmäßig an diesem auch der Drehantrieb angeordnet. Auch der Drehantrieb kann aus an sich bekannten Antriebsmitteln bestehen, z.B. einem hydraulisch betreibbaren Motor, der über einen Ketten-, Riemen- oder Zahnradtrieb auf die Trommel wirkt. Wenn zwei Drehlager vorgesehen sind, genügt ein einseitiger Antrieb für die Drehung der Trommel. Alternativ oder zusätzlich kann auch eine Lagerung der Trommel an ihrem Umfangsbereich auf an der Vorrichtung angeordneten Rollen erfolgen, die die Trommel drehbar tragen. Die Trommel ist bei letztgenannten Ausführung zumindest in dem Ablaufbereich der Rollen kreisrund ausgeführt; in ihren übrigen Bereichen oder bei Lagerung an mindestens einem stirnwandseitigen Drehlager kann der Trommelmantel auch als Vieleck geformt sein.

Weiter ist vorgesehen, daß das Drehlager als Drehkranzpaar mit zwei gegeneinander verdrehbaren Drehkränzen ausgeführt ist, wobei bevorzugt der radial innere Drehkranz feststehend und der radial äußere Drehkranz mit der Trommel drehbar ist. Diese Ausführung des Drehlagers als Drehkranzpaar erlaubt eine stabile und störungsunempfindliche Lagerung der Trommel und zudem einen einfachen Antrieb, indem hierzu der äußere Drehkranz genutzt wird.

Zur Bildung einer weiteren Öffnung für die Beschickung und/oder Entleerung der Trommel wird vorgeschlagen, daß in den inneren Drehkranz eine Wand eingesetzt ist, die ganz oder teilweise geöffnet und/oder entfernt werden kann. Bevorzugt ist dabei vorgesehen, daß zumindest der obere Teil, vorzugsweise die obere Hälfte der Wand um einen Winkel bis zu 60° nach innen in das Trommelinnere schwenkbar ist, wobei die Schwenkachse im wesentlichen horizontal und in der Wandebene verläuft. Mit dieser Ausgestaltung wird insbesondere erreicht, daß eine selbsttätige Entleerung der Trommel zur Seite hin erfolgen kann, indem im Inneren der Trommel das gemischte Futter mit nach oben genommen wird und dann von dort auf den nach innen geschwenkten Teil der in dem Drehkranz angeordneten Wand fällt. Auf dieser schräg stehenden Wand rutscht dann das Futter nach außen, z.B. in einen Futtertrog.

Um einerseits den Mischvorgang und andererseits den zuvor beschriebenen Entleerungsvorgang zu unterstützen und zu fördern, wird weiter vorgeschlagen, daß im Inneren der Trommel mindestens ein schaufel- oder paddelförmiger Mischflügel angeordnet ist, der an der Innenfläche des Trommelmantels und/oder der Trommelstirnwände angebracht ist. Zur Erzielung einer intensiveren Wirkung sind vorzugsweise mehrere, z.B. zwei bis sechs Mischflügel in der Trommel vorgesehen.

Eine weitere Verbesserung der Misch- und Entleerungsfunktion kann dadurch erreicht werden, daß der Mischflügel eine Schrägstellung aufweist, derart, daß das der einen Trommelstirnwand zugewandte Ende des Mischflügels gegenüber dem der anderen Trommelstirnwand zugewandten Ende des Mischflügels in Umfangsrichtung der Trommel versetzt ist. Hierdurch bewirken die Mischflügel auch eine Förderung des Futters zur Seite hin, wenn die Trommel in Drehung versetzt wird, wobei die Richtung der seitlichen Förderung in Abhängigkeit von der Drehrichtung sich ebenfalls ändert.

Zur Anpassung der Misch- und Verteilvorrichtung an unterschiedliche Einsatzzwecke und zur Optimierung ihrer Funktion wird vorgeschlagen, daß der Mischflügel auswechselbar und/oder in seiner Stellung veränderbar ist.

Um den Austrag des Futters, z.B. in einen Futtertrof, zu verbessern, wird vorgeschlagen, daß die Wand, die in den Drehkranz eingesetzt ist, als Ganzes um ihre Schwenkachse verschwenkbar ist, wobei der untere Teil der Wand nach außen schwenkbar ist. Auch auf diesem nach außen geschwenkten Teil der Wand kann beim Entleeren der Trommel das Futter abwärts rutschen, wobei bevorzugt weiter vorgesehen ist, daß im Anschluß an den unteren Teil der Wand eine Futterrutsche vorgesehen ist. Diese Futterrutsche kann zusätzlich verstellbar oder verschwenkbar ausgeführt werden, um die Misch- und Verteilvorrichtung an die jeweiligen Gegebenheiten in unterschiedlichen Stallungen anpassen zu können. Die Vorrichtung kann auch problemlos für eine Zweiseiten-Entleerung ausgeführt werden.

Zur Erweiterung des Einsatzbereiches der erfindungsgemässen Misch- und Verteilvorrichtung sieht eine weitere Ausgestaltung vor, daß sie mit einer Silagefräs- oder -schneideinrichtung ausgestattet ist, mittels welcher Silage aus einem Silo ablösbar ist und wobei die lose Silage unmittelbar in den ausgeklappten Trommelmantelteil förderbar oder von letzterem durch Verfahren der Misch- und Verteilvorrichtung aufnehmbar und dann durch Einklappen des Trommelmantelteils in das Innere der Trommel einkippbar ist. Silagefräs- oder -schneideinrichtungen sind in unterschiedlichen Ausführungen, auch für den Einsatz in Verbindung mit einer Misch- und Verteilvorrichtung, an sich bekannt. Eine derartige zusätzliche Einrichtung an der Misch- und Verteilvorrichtung erspart dem Benutzer eine eigene Silagefräs- oder -schneideinrichtung, so daß Fütterungsvorgänge vereinfacht und beschleunigt werden.

Das Beschicken der Trommel mit weiteren Futterbestandteilen, insbesondere Kraftfutter und/oder Mineralfutter, kann dann beispielsweise aus Säcken oder aus Vorratsbehältern entweder in den ausgeklappten Trommelmanteilteil oder unmittelbar durch den bei ausgeklapptem Trommelmantelteil offenen Umfangsbereich der Trommel erfolgen.

Da die Trommel zur Mischung der verschiedenen Futterbestandteile insgesamt gedreht wird, kann unterschiedlichstes Futter, einschließlich langfaserigem Material, wie Grassilage oder Heu, zuverlässig und ohne die Gefahr von Betriebsstörungen verarbeitet werden.

Schließlich kann die Vorrichtung gemäß Erfindung als Anhänger zur Kopplung mit einem Schlepper oder dergleichen Arbeitsfahrzeug ausgeführt sein, sie kann als selbstfahrendes Fahrzeug mit Antriebseinheit, Lenkung und Fahrzeugführerstand ausgeführt sein oder sie kann als Anbaugerät zur Verbindung mit den Kupplungsorganen, insbesondere einer Dreipunktkupplung, eines Schleppers ausgeführt sein.

Zwei Ausführungsbeispiele der Erfindung werden im folgenden anhand einer Zeichnung erläutert. Die Figuren der Zeichnung zeigen:
- Figur 1: eine Misch- und Verteilvorrichtung in einer ersten Ausführung in schematischer Seitenansicht und
- Figur 2: die Misch- und Verteilvorrichtung in einer zweiten Ausführung, ebenfalls in schematischer Seitenansicht.

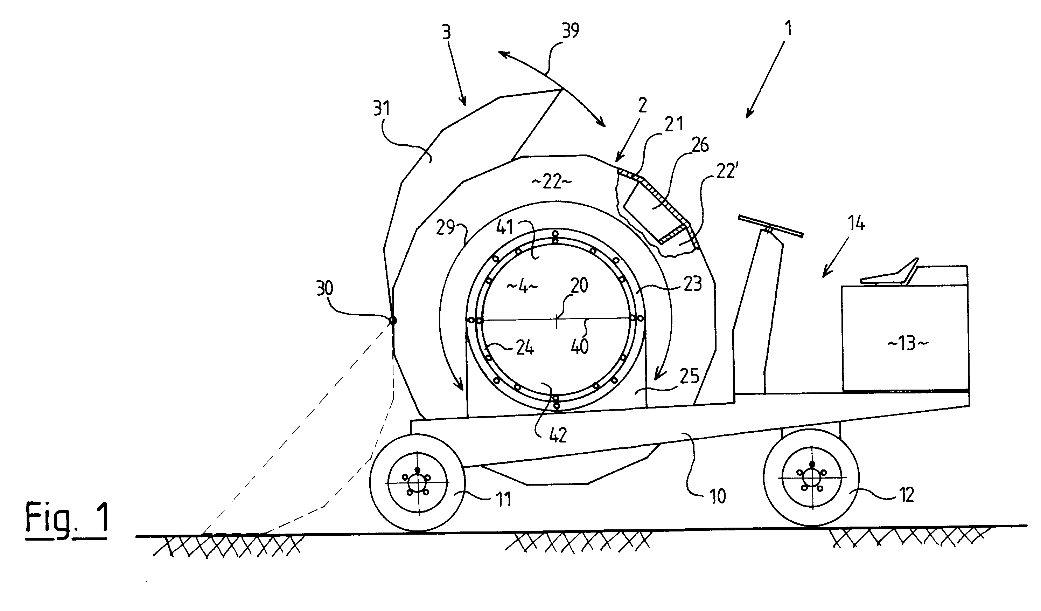

Wie die Figur 1 der Zeichnung zeigt, ist das hier dargestellte Ausführungsbeispiel der Misch- und Verteilvorrichtung 1 als selbstfahrendes Fahrzeug ausgeführt. Den tragenden Teil der Vorrichtung 1 bildet ein Fahrgestell 10 mit zwei Vorderrädern 11 und einem lenkbaren, angetriebenen Hinterrad 12. Über dem Hinterrad 12 sind eine Antriebseinheit 13 sowie ein Fahrzeugführerstand 14 angeordnet, wie dies an sich von vergleichbaren Fahrzeugen bekannt ist.

Im vorderen, d.h. in der Figur 1 linken Teil der Vorrichtung 1 ist eine Trommel 2 angeordnet, die in zwei durch je ein Drehkranzpaar 23, 24 gebildeten Drehlagern drehbar gelagert ist. Die zugehörige Drehachse 20 verläuft horizontal und quer zur Längsachse der Vorrichtung 1, d.h. senkrecht zur Zeichnungsebene der Figur 1. Über Träger 25 ist die Trommel 2 auf dem Fahrgestell 10 abgestützt, wobei die Anordnung der Drehkränze 23, 24 und des Trägers 25 auf der hier nicht sichtbaren anderen Seite der Trommel 2 sich wiederholt.

Die Trommel 2 besitzt einen vieleckigen Trommelmantel 21 sowie zwei Stirnwände 22, 22', die jeweils als geschlossene Blechplatten ausgebildet sind und auf geeignete Art und Weise, vorzugsweise durch Verschweißen, miteinander dicht verbunden sind. Der äußere Drehkranz 23 des Drehlagers ist dabei mit der Stirnwand 22 der Trommel 2 verbunden und mit dieser zusammen drehbar, während der innere Drehkranz feststehend ausgebildet ist und seinerseits mit dem Träger 25 verbunden ist. Durch einen hier nicht näher dargestellten, an sich bekannten Drehantrieb, der vorzugsweise an dem äußeren Drehkranz 23 angreift, ist die Trommel 2 insgesamt um die Drehachse 20 in Drehung versetzbar, wie dies durch den Drehpfeil 29 angedeutet ist. Zweckmäßig ist dabei der Drehantrieb in seiner Drehrichtung umschaltbar, so daß die Trommel 2 wahlweise in die eine oder in die andere Richtung gedreht werden kann.

Wie aus der Figur 1 weiter ersichtlich ist, ist ein Teil des Mantels 21 der Trommel 2 als ausklappbarer Trommelmantelteil 3 ausgebildet, der um eine Schwenkachse 30 im Sinne des Bewegungspfeiles 39 verschwenkbar ist. Außerdem ist dieser ausklappbare Trommelmantelteil 3 mit flachen Seitenwänden 31 ausgebildet, wodurch der ausklappbare Trommelmantelteil 3 die Form einer Ladeschaufel erhält. In gestrichelten Linien ist in Figur 1 die Verschwenkungsendstellung des verschwenkbaren Trommelmantelteils 3 in Ausklapprichtung dargestellt, wobei dann der ausklappbare Trommelmantelteil 3 mit seinem freien Ende auf dem Boden aufliegt. In dieser Stellung kann durch Verfahren der Vorrichtung 1 in Vorwärtsrichtung, d.h. in Figur 1 nach links, auf dem Boden angehäuftes Futter in die durch den ausgeklappten Trommelmantelteil 3 gebildete Ladeschaufel aufgenommen und durch Einklappen des verschwenkbaren Trommelmantelteils 3 in das Innere der Trommel 2 eingekippt werden. Im geschlossenen Zustand der Trommel 2, d.h. bei vollständig eingeklapptem Trommelmantelteil 3, kann eine Durchmischung des Futters durch Drehung der Trommel 2 im Sinne des Drehpfeiles 29 bewirkt werden. Dabei können insbesondere unterschiedlichste Futterarten intensiv miteinander vermischt werden.

Zum Austragen des aufbereiteten, gemischten Futters ist bei dem hier gezeigten Ausführungsbeispiel der Mischund Verteilvorrichtung im Bereich des inneren Drehkranzes 24 eine verschwenkbare, in ihrem Umriß entsprechend dem Drehkranz 24 runde Wand 4 vorgesehen. Diese Wand 4 ist insgesamt um eine horizontal in der Wandebene verlaufende Schwenkachse 40 verschwenkbar, wobei der obere Teil 41 der Wand 4 nach innen in die Trommel 2 und der untere Teil 42 der Wand 4 entsprechend nach außen verschwenkbar ist. Auch hierzu kann eine nicht eigens dargestellte fernbetätigbare Vorrichtung, insbesondere eine hydraulische Kolben-Zylinder-Einheit, vorgesehen werden.

Zur Intensivierung des Mischvorganges und zur Erzielung einer Seitwärts-Förderung des Futters im Inneren der Trommel 2 bei deren Drehung sind an der Innenfläche des Trommelmantels 21 mehrere Mischflügel 26 angebracht, von denen hier einer hinter dem weggebrochenen Teil der vorderen Stirnwand 22 sichtbar ist. Wie aus der Zeichnung sichtbar wird, ist der Mischflügel 26 schräg verlaufend an der Innenseite des Trommelmantels 21 angebracht, wodurch bei Drehung der Trommel 2 die gewünschte seitliche Förderung des Futters im Inneren der Trommel 2 erreicht wird. Außerdem dienen die Mischflügel 26 dazu, bei Drehung der Trommel 2 Futter mit nach oben zu nehmen, wobei dann aus dem oberen Bereich der Trommel 2 das Futter wieder nach unten fällt und sich intensiv durchmischt. Zum Entleeren der Trommel 2, z.B. in einen seitlich von der Vorrichtung 1 befindlichen Futtertrog, wird die verschwenkbare Wand 4 in ihre Öffnungsstellung verschwenkt, wobei dann der obere Teil 41 der Wand 4 in das Innere der Trommel 2 weist. Hierdurch wird eine schräge Fläche gebildet, die als Futterrutsche dient. Durch Drehung der Trommel 2 in einer Richtung, die hier entgegengesetzt dem Uhrzeigersinn verläuft, wird das Futter nach oben gefördert und von den Mischflügeln 26 zur Stirnseite 22 hin gebracht und auf den in das Innere der Trommel 2 weisenden Teil 41 der Wand 4 abgeworfen. Auf der schrägen Fläche der Wand 4 rutscht dann das abgeworfene Futter nach außen. Unter dem unteren Teil 42 der Wand 4 kann sich eine vorzugsweise verstellbare Futterrutsche anschließen, falls ein noch gezielteres Austragen gewünscht wird.

Sowohl der Antrieb des Hinterrades 12 als auch der Trommel 2 sowie die Betätigung der Mittel zur Verstellung des ausklappbaren Trommelmantelteils 3 und der Wand 4 erfolgt zweckmäßig hydraulisch, wobei von der Antriebseinheit 13 eine Druckölpumpe antreibbar ist, die über entsprechende Versorgungsleitungen und vom Führerstand 14 aus bedienbare Ventile die einzelnen Antriebe und Betätigungsmittel versorgt.

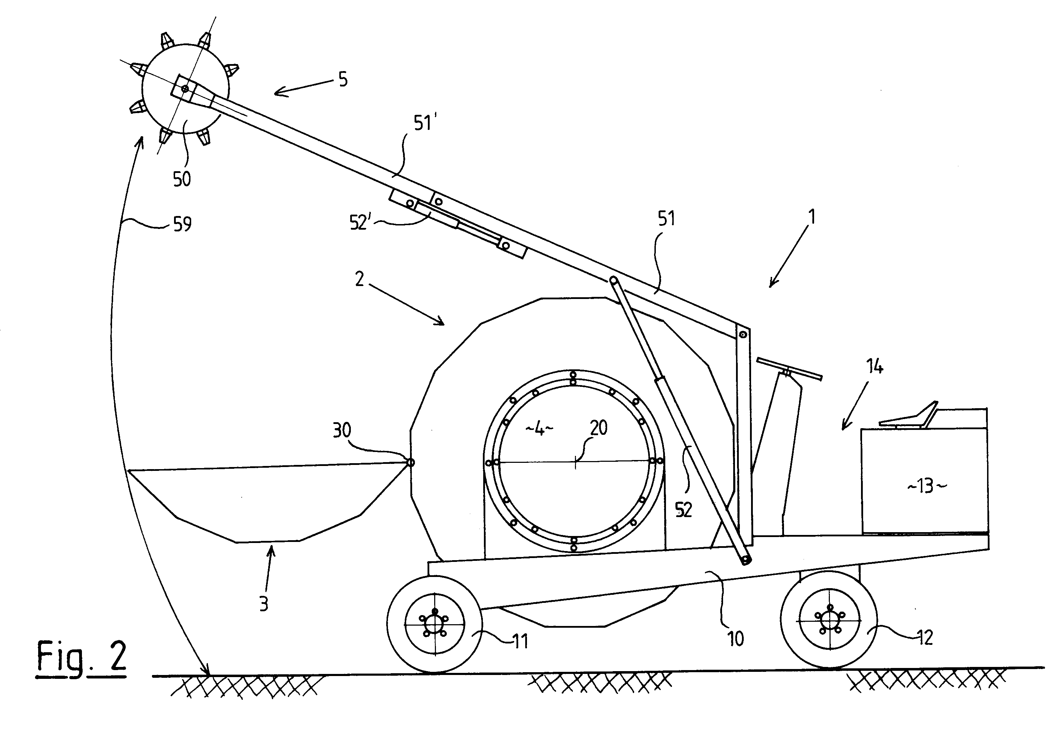

Figur 2 der Zeichnung zeigt die Misch- und Verteilvorrichtung 1 gemäß Figur 1 in einer Ausführung, bei der zusätzlich eine Silagefräse 5 vorgesehen ist. Zusätzlich zu ihren bereits anhand von Figur 1 erläuterten Einzelteilen besitzt die Vorrichtung 1 gemäß Figur 2 einen mehrteiligen Ausleger 51, 51', dessen eines Ende an dem Fahrgestell 10 der Vorrichtung 1 abgestützt ist und dessen freies Ende eine Fräswalze 50 trägt. In dem in Figur 2 gezeigten Zustand der Vorrichtung 1 ist der Ausleger 51, 51' vollständig ausgeklappt und in einer angehobenen Stellung gezeigt. Hierzu sind zwei Kolben-Zylinder-Einheiten 52 und 52' in ihre Ausfahrstellung gebracht. Durch Einfahren der Kolben-Zylinder-Einheit 52 zwischen Fahrgestell 10 und Ausleger 51 kann die Silagefräse 5 insgesamt abgesenkt werden, wobei unter Drehung der Fräswalze 50 aus der Stirnseite eines hier nicht dargestellten Futtersilos Silage abfräsbar ist. Der Bewegungsbereich der Fräswalze 50 ist dabei durch den Bewegungspfeil 59 angedeutet.

Die durch die Fräswalze 50 bei ihrer Tätigkeit abgelöste Silage fällt nach unten und gelangt dabei in den teilweise ausgeklappten Trommelmantelteil 3, der hier gemäß Figur 2 in eine etwa horizontal nach vorn weisende Stellung gebracht ist. Nach Beendigung des Fräsvorganges kann dann durch Einklappen des Trommelmantelteils 3 die abgefräste lose Silage in das Innere der Trommel 2 eingekippt werden. Weitere Futterbestandteile können dann entweder manuell zugegeben oder, wie anhand von Figur 1 beschrieben, mit dem Trommelmantelteil 3 eingeladen werden.

Zum Verfahren der Vorrichtung 1 wird dann der Ausleger 51, 51' durch Einfahren der Kolben-Zylinder-Einheit 52' nach unten hin abgewinkelt und nach Absenken des weiteren Auslegers 51 liegt dann die Fräswalze 50 unmittelbar vor der Trommel 2 oberhalb der Vorderräder 11, ohne daß dabei eine Drehung der Trommel 2 behindert wird.

## Patentansprüche

1. Misch- und Verteilvorrichtung für Viehfutter, insbesondere für Silage, Biertreber, Kraftfutter, Mineralfutter und dergleichen mischfähiges Futter, mit einem Behälter zur Aufnahme des zu mischenden und zu verteilenden Viehfutters und mit Mitteln zur Durchmischung und Ausbringung des Viehfutters,
dadurch gekennzeichnet,
daß der Behälter eine geschlossene Trommel (2) ist mit einem Trommelmantel (21) und zwei Trommelstirnwänden (22, 22'), wobei die Trommel (2) um eine horizontale oder geneigte, durch die Trommelstirnwände (22, 22') verlaufende Drehachse (20) drehbar ist und wobei die Trommel (2) wenigstens eine verschließbare Öffnung für das Beschicken und Entleeren der Trommel (2) aufweist.

2. Misch- und Verteilvorrichtung nach Anspruch 1, dadurch gekennzeichnet, daß zur Bildung der verschließbaren Öffnung der Trommelmantel (21) über einen Teil (3) seines Umfanges ausklappbar ist.

3. Misch- und Verteilvorrichtung nach Anspruch 2, dadurch gekennzeichnet, daß der ausklappbare Trommelmantelteil (3) um eine entlang der Trommelmantelfläche parallel zur Drehachse (20) verlaufende Schwenkachse (30) verschwenkbar ist.

4. Misch- und Verteilvorrichtung nach Anspruch 3, dadurch gekennzeichnet, daß der ausklappbare Trommelmantelteil (3) 1/8 bis 1/3 des Trommelmantelumfanges umfaßt.

5. Misch- und Verteilvorrichtung nach einem der Ansprüche 2, bis 4, dadurch gekennzeichnet, daß der ausklappbare Trommelmantelteil (3) mit zu den Trommelstirnwänden (22, 22') parallelen Seitenwänden (31) zur Bildung einer Ladeschaufel ausgeführt ist.

6. Misch- und Verteilvorrichtung nach einem der vorhergehenden Ansprüche, dadurch gekennzeichnet, daß an mindestens einer der Trommelstirnwände (22, 22') ein Drehlager und an mindestens einer der Trommelstirnwände (22, 22') ein Drehantrieb zur Drehung der Trommel (2) angeordnet ist, wobei der Drehantrieb entweder für nur eine Drehrichtung oder umschaltbar für wahlweise die eine oder die andere Drehrichtung ausgelegt ist.

7. Misch- und Verteilvorrichtung nach Anspruch 6, dadurch gekennzeichnet, daß das Drehlager als Drehkranzpaar (23, 24) mit zwei gegeneinander verdrehbaren Drehkränzen (23; 24) ausgeführt ist, wobei der radial innere Drehkranz (24) feststehend und der radial äußere Drehkranz (23) mit der Trommel (2) drehbar ist.

8. Misch- und Verteilvorrichtung nach Anspruch 7, dadurch gekennzeichnet, daß in den inneren Drehkranz (24) eine Wand (4) eingesetzt ist, die ganz oder teilweise geöffnet und/oder entfernt werden kann.

9. Misch- und Verteilvorrichtung nach Anspruch 8, dadurch gekennzeichnet, daß zumindest der obere Teil (41), vorzugsweise die obere Hälfte der Wand (4) um einen Winkel bis zu 60° nach innen in das Trommelinnere schwenkbar ist, wobei die Schwenkachse (40) im wesentlichen horizontal und in der Wandebene verläuft.

10. Misch- und Verteilvorrichtung nach einem der vorhergehenden Ansprüche, dadurch gekennzeichnet, daß im Inneren der Trommel (2) mindestens ein schaufel- oder paddelförmiger Mischflügel (26) angeordnet ist, der an der Innenfläche des Trommelmantels (21) und/ oder der Trommelstirnwände (22, 22') angebracht ist.

11. Misch- und Verteilvorrichtung nach Anspruch 10, dadurch gekennzeichnet, daß der Mischflügel (26) eine Schrägstellung aufweist, derart, daß das der einen Trommelstirnwand (22) zugewandte Ende des Mischflügels (26) gegenüber dem der anderen Trommelstirnwand (22') zugewandten Ende des Mischflügels (26) in Umfangsrichtung der Trommel (2) versetzt ist.

12. Misch- und Verteilvorrichtung nach Anspruch 11, dadurch gekennzeichnet, daß der Mischflügel (26) auswechselbar und/oder in seiner Stellung veränderbar ist.

13. Misch- und Verteilvorrichtung nach einem der Ansprüche 9 bis 12, dadurch gekennzeichnet, daß die Wand (4) als Ganzes um die Schwenkachse (40) verschwenkbar ist, wobei der untere Teil (42) der Wand (4) nach außen schwenkbar ist.

14. Misch- und Verteilvorrichtung nach Anspruch 13, dadurch gekennzeichnet, daß im Anschluß an den unteren Teil (42) der Wand (4) eine Futterrutsche vorgesehen ist.

15. Misch- und Verteilvorrichtung nach einem der Ansprüche 5 bis 14, dadurch gekennzeichnet, daß es mit einer Silagefräs- oder -schneideinrichtung (5) ausgestattet ist, mittels welcher Silage aus einem Silo ablösbar ist und wobei die lose Silage unmittelbar in den ausgeklappten Trommelmantelteil (3) förderbar oder von letzterem durch Verfahren des Misch- und Verteilvorrichtunges (1) aufnehmbar und dann durch Einklappen des Trommelmantelteils (3) in das Innere der Trommel (2) einkippbar ist.

16. Misch- und Verteilvorrichtung nach einem der Ansprüche 1 bis 15, dadurch gekennzeichnet, daß sie als Anhänger zur Kopplung mit einem Schlepper oder dergl. Arbeitsfahrzeug ausgeführt ist.

17. Misch- und Verteilvorrichtung nach einem der Ansprüche 1 bis 15, dadurch gekennzeichnet, daß sie als selbstfahrendes Fahrzeug mit Antriebseinheit (13), Lenkung und Fahrzeugführerstand (14) ausgeführt ist.

18. Misch- und Verteilvorrichtung nach einem der Ansprüche 1 bis 15, dadurch gekennzeichnet, daß sie als Anbaugerät zur Verbindung mit den Kupplungsorgangen, insbesondere einer Dreipunktkupplung, eines Schleppers ausgeführt ist.
